**Europäisches Patentamt**

**European Patent Office**

**Office européen des brevets**

(11) Veröffentlichungsnummer : **0 361 213 B1**

## (12) EUROPÄISCHE PATENTSCHRIFT

(45) Veröffentlichungstag der Patentschrift :
**04.03.92 Patentblatt 92/10**

(51) Int. Cl.⁵ : **B60H 1/24**

(21) Anmeldenummer : **89116978.1**

(22) Anmeldetag : **13.09.89**

(54) **Luftauslass für Innenräume, insbesondere für den Innenraum eines Kraftfahrzeuges.**

(30) Priorität : **26.09.88 DE 3832956**

(43) Veröffentlichungstag der Anmeldung :
**04.04.90 Patentblatt 90/14**

(45) Bekanntmachung des Hinweises auf die
Patenterteilung :
**04.03.92 Patentblatt 92/10**

(84) Benannte Vertragsstaaten :
**DE ES FR GB IT NL SE**

(56) Entgegenhaltungen :
**FR-A- 2 029 929**
**GB-A- 718 400**
**GB-A- 1 130 009**
**US-A- 2 224 312**
**US-A- 3 636 854**

(73) Patentinhaber : **SIEMENS
AKTIENGESELLSCHAFT
Wittelsbacherplatz 2
W-8000 München 2 (DE)**

(72) Erfinder : **Soethout, Freddie
Am Blauen Stein 6
W-5024 Pulheim 2 (DE)**

EP 0 361 213 B1

## Beschreibung

Die Erfindung liegt auf dem Gebiet der Belüftung von Innenräumen und ist bei der konstruktiven Ausgestaltung eines Luftauslasses anzuwenden, dessen Ausströmcharakteristik durch schwenkbar gelagerte Lamellen veränderbar ist. Derartige Luftauslässe sind insbesondere für den Einsatz in Kraftfahrzeugen geeignet. Derartige Konstruktionen sind z.B. aus US-A-3 636 854 bekannt.

Zur Belüftung des Innenraumes von Kraftfahrzeugen ist ein Luftauslaß bekannt, bei dem ein drehbar gelagertes Gehäuseteil mit mehreren feststehenden und mit mehreren schwenkbar gelagerten Lamellen zur Luftführung versehen ist. Bei diesem Luftauslaß sind die feststehenden Lamellen parallel zueinander, die schwenkbaren Lamellen mit zueinander parallelen Schwenkachsen und die feststehenden Lamellen quer zu den schwenkbaren Lamellen angeordnet. Weiterhin weist jede schwenkbare Lamelle mehrere Lamellenzungen auf und greift mit diesen Zungen kämmend in die feststehenden Lamellen ein. Die feststehenden und die schwenkbaren Lamellen bewirken beim Hindurchströmen von Luft einen kompakten Luftstrahl, dessen Richtung durch das drehbar gelagerte Gehäuseteil und die schwenkbar gelagerten Lamellen einstellbar ist (Luftauslaß für Pkw-Typ AUDI 200 quattro, Baujahr 1988).

Zur Belüftung des Innenraumes von Kraftfahrzeugen ist weiterhin ein Luftauslaß bekannt, mit dem entweder ein gebündelter oder ein divergierender Luftstrahl erzeugt werden kann. Hierzu ist die Ausströmöffnung des Luftauslasses durch Leitwände gitterartig in eine größere Anzahl von Luftführungskanälen unterteilt. Durch gemeinsames Verschwenken der Leitwände, wodurch dem Luftauslaß die Form einer Kugelkalotte erteilt wird, kann eine Neigung bestimmter Leitwände gegenüber der Achse des Luftauslasses erreicht werden. Dies hat zur Folge, daß die Ausströmungsrichtungen der Luftführungskanäle von der Achse des Luftauslasses divergieren, so daß aus dem Luftauslaß ein in verschiedene Strömungsrichtungen aufgefächerter Luftstrahl austritt. Zur Einstellung dieses Luftstrahles können die Leitwände mit zwei kreuzartig angeordneten Spannfedern in Schwenkverbindung stehen (DE-OS 24 44 116).

Ausgehend von einem Luftauslaß mit den Merkmalen des Oberbegriffes des Patentanspruches 1 liegt der Erfindung die Aufgabe zugrunde, den Luftauslaß so auszugestalten, daß sowohl eine richtbare Kompaktstrahl-Ausströmung als auch eine Diffus-Ausströmung sowie Zwischenstellungen einstellbar sind.

Zur Lösung dieser Aufgabe ist gemäß der Erfindung vorgesehen, daß jede schenkbare Lamelle aus zwei Teillamellen besteht, deren Lamellenzungen einander abwechselnd angeordnet sind, und daß jede Teillamelle selbständig schwenkbar ist.

Mittels einer derartigen Ausgestaltung des Luftauslasses wird diesem mit einfachen konstruktiven Mitteln eine wesentliche neue Funktion vermittelt, nämlich die Erzeugung einer diffusen Luftausströmung. Dies ist vor allem im Hinblick auf Kraftfahrzeuge mit Klimaanlagen vorteilhaft, weil kühle oder kalte Kompaktstrahl-Ausströmungen von der in unmittelbarer Nähe des Luftauslasses sitzenden Person in aller Regel als unangenehm empfunden werden.

Eine besonders vorteilhafte Ausgestaltung des neuen Luftauslasses besteht darin, daß jede Lamellenzunge der beiden Teillamellen einen Schlitz aufweist, in den jeweils eine feststehende Lamelle eingreift. Mit einer derartigen Ausgestaltung wird bei unterschiedlicher Stellung der beiden Teillamellen eine besonders wirksame Verwirbelung der ausströmenden Luft erreicht, weil jeweils zwei eine unterschiedliche Ausströmungsrichtung bewirkende Teilzungen zweier nebeneinander liegender Lamellenzungen der beiden Teillamellen ohne Trennung durch eine feststehende Lamelle unmittelbar nebeneinander liegen.

Die diffuse Ausströmcharakteristik des neuen Luftauslasses kann dadurch verbessert werden, daß die Koppelpunkte zwischen der die jeweiligen Teillamellen untereinander koppelnden Koppelstange und den Teillamellen einen von Teillamelle zu Teillamelle zunehmenden bzw. abnehmenden Abstand zur jeweiligen Schwenkachse der Teillamelle haben. Dadurch lassen sich unterschiedliche Schrägstellungen für die einzelnen Teillamellen erreichen.

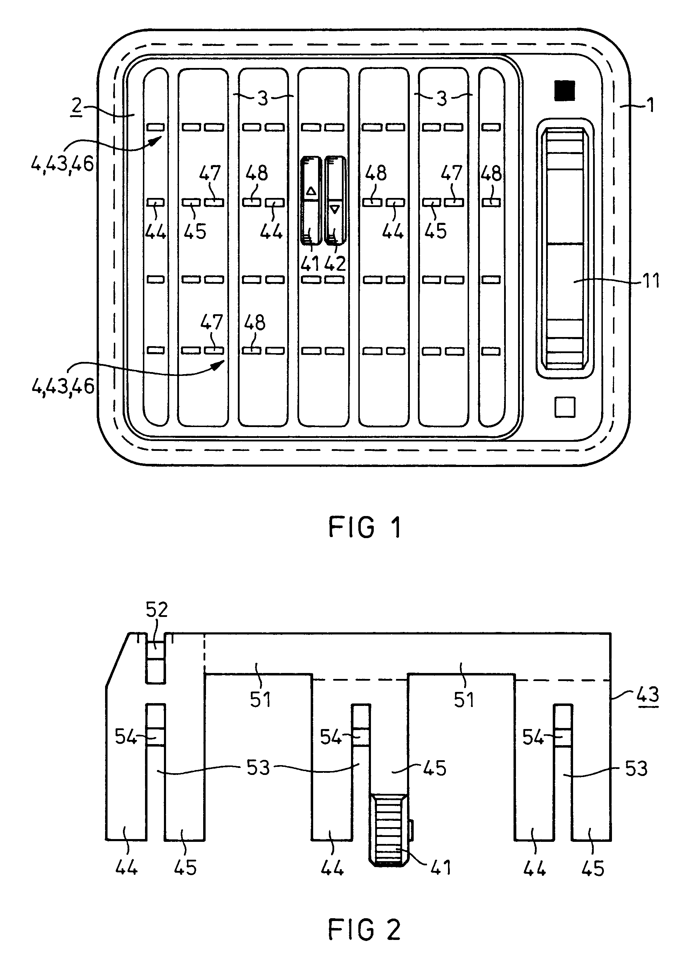

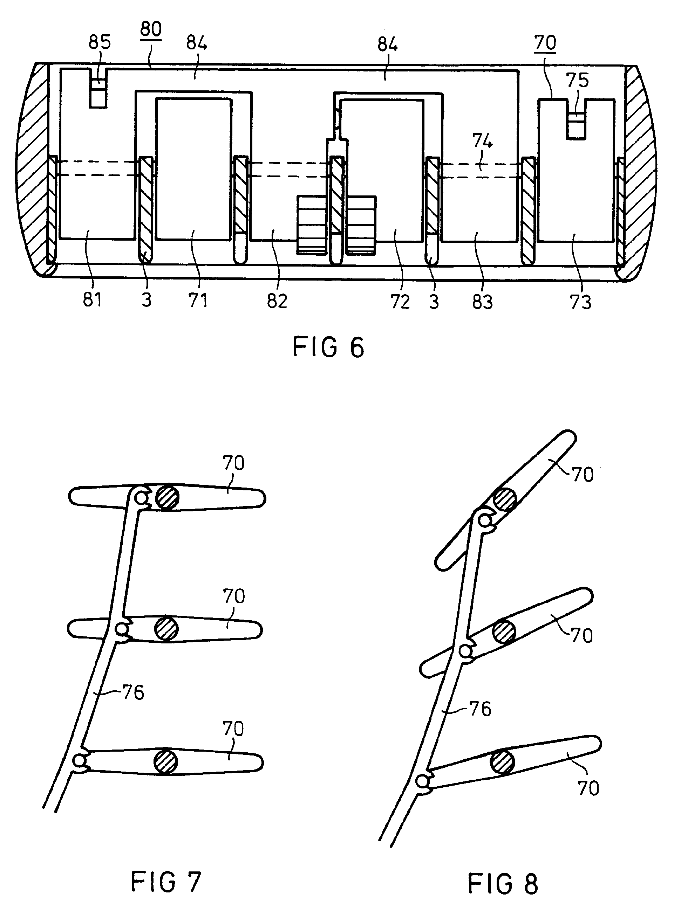

Zwei Ausführungsbeispiele des neuen Luftauslasses sind in den Figuren 1 bis 8 dargestellt. Dabei zeigen die Figuren 1 bis 5 ein Ausführungsbeispiel eines Luftauslasses mit geschlitzten Lamellenzungen der beiden schwenkbaren Teillamellen und die Figuren 6 bis 8 ein Ausführungsbeispiel mit ungeschlitzten Lamellenzungen der beiden Teillamellen.

Figur 1 zeigt einen ersten Luftauslaß in Ansicht,

Figur 2 eine schwenkbare Teillamelle,

Figur 3 eine Koppelstange zur Verbindung mehrerer Teillamellen,

Figur 4 eine aus zwei Teillamellen bestehend schwenkbare Lamelle mit Zuordnung zu feststehenden Lamellen,

Figur 5 eine Seitenansicht eines vertikalen Schnittes durch den Luftauslaß mit zwei schwenkbaren Teillamellen gemäß Figur 4,

Figur 6 die Zuordnung von zwei ungeschlitzten Teillamellen zu den feststehenden Lamellen eines Gehäuseteiles und die

Figuren 7 und 8 die Zuordnung einer Koppelstange zu mehreren Teillamellen.

Der Luftauslaß gemäß Figur 1 besteht aus einem Rahmen 1, in dem ein Gehäuseteil 2 um eine vertikale Mittelachse drehbar gelagert ist. Das Gehäuseteil weist vertikal verlaufende, feststehende Lamellen 3 auf und ist weiterhin mit horizontal angeordneten schwenkbaren Lamellen 4 versehen. Die vier mit horizontaler Schwenkachse angeordneten Lamellen 4 bestehen jeweils aus zwei Teillamellen 43 und 46 mit den Lamellen-Teilzungen 44 und 45 bzw. 47 und 48. Die Lamellen-Teilzungen stehen kämmend im Eingriff mit den feststehenden Lamellen 3. Zur Schwenkung der untereinander gekoppelten Teillamellen sind die beiden Einstellelemente 41 und 42 vorgesehen. Ein weiteres im Rahmen 1 angeordnetes Einstellelement 11 dient zum Verschließen bzw. Öffnen des Luftauslasses. In der dargestellten Anordnung der schwenkbaren Lamellen 4 tritt aus dem Luftauslaß ein gebündelter Luftstrahl horizontal aus.

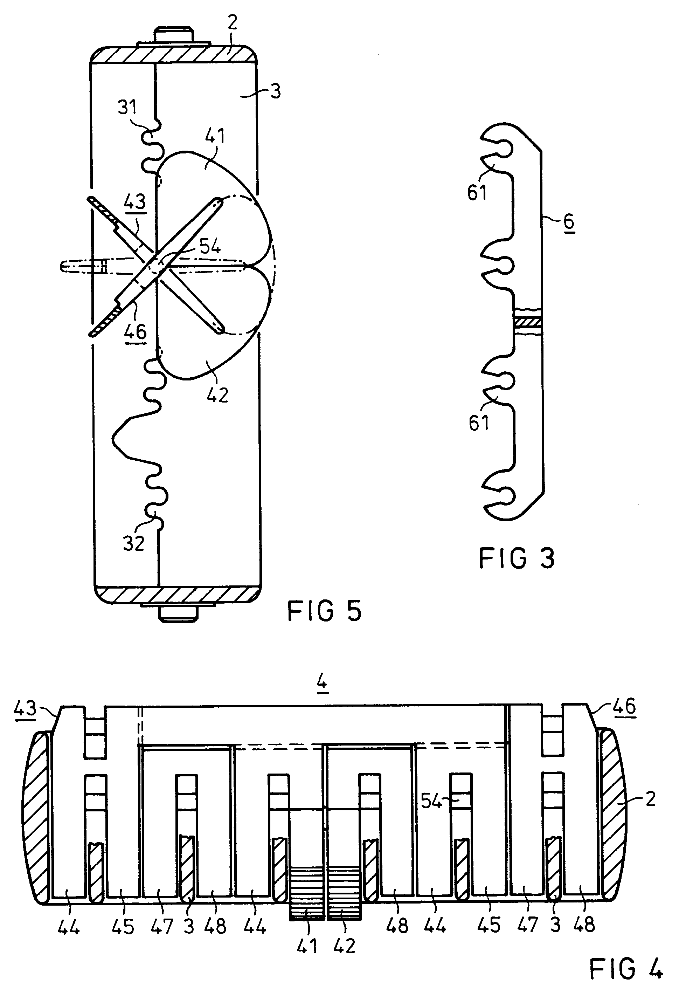

Gemäß Figur 2 besteht die Teillamelle 43 aus drei Lamellenzungen, die jeweils von den beiden Lamellen-Teilzungen 44 und 45 gebildet werden. Die Lamellenzungen sind untereinander durch den Steg 51 verbunden, in dem weiterhin eine Koppelachse 52 eingearbeitet ist. In dem zwischen zwei Lamellen-Teilzungen 44/45 gebildeten Schlitz 53 ist weiterhin jeweils eine Schwenkachse 54 vorgesehen. - Die Teillamelle 46 ist gleichartig wie die Teillamelle 43 ausgebildet. Die gegenseitige Zuordnung von jeweils zwei Teillamellen 43 und 46 erfolgt in der Weise, daß die Teillamelle 46 in gewendeter Lage so angeordnet wird, daß ihre Lamellenzungen jeweils zwischen den Lamellenzungen bzw. neben den Lamellenzungen der Teillamelle 43 zu liegen kommen (siehe Figur 4).

Zur Koppelung mehrerer gleichartig angeordneter Teillamellen 43 bzw. 46 ist gemäß Figur 3 jeweils eine Koppelstange 6 vorgesehen, die mit aufklippsbaren Lagervorsprüngen 61 versehen ist.

Figur 4 zeigt einen durch den Luftauslaß gemäß Figur 1 geführten horizontalen Schnitt in Draufsicht. Erkennbar ist eine in dem Gehäuseteil 2 mit den feststehenden Lamellen 3 angeordnete schwenkbare Lamelle 4, die aus den beiden Teillamellen 43 und 46 besteht. Die beiden Koppelstangen zur Verbindung gleichartiger Teillamellen sind hier nicht dargestellt. - Die Zuordnung der schwenkbaren Lamellen und der feststehenden Lamellen ist so getroffen, daß jeweils eine feststehende Lamelle 3 in einen Schlitz zwischen zwei Teilzungen 44 und 45 bwz. 47 und 48 der schwenkbaren Lamellen eingreift.

Die schwenkbaren Teillamellen 43 und 46 können zur Einstellung eines kompakten Luftstrahles gemeinsam nach oben oder unten verschwenkt werden. Zur Einstellung einer diffusen Luftausströmung können sie aber auch unterschiedlich verschwenkt werden, wie aus Figur 5 ersichtlich ist. Danach ist die Teillamelle 43 nach unten und die Teillamelle 46 nach oben geschwenkt, jeweils um ca. 45°. Jede Teillamelle kann aber auch Zwischenstellungen zwischen 0 und 45° einnehmen. - Figur 5 läßt zusätzlich erkennen, daß die feststehenden Lamellen 3 mit Lagervorsprüngen 31 versehen sind, in die die Schwenkachsen 54 der schwenkbaren Lamellen eingeklippst werden.

Bei dem Ausführungsbeispiel gemäß Figur 6 sind ähnlich Figur 4 jeweils zwei Teillamellen 70 und 80 vorgesehen. Die Teillamelle 70 besteht aus drei Lamellenzungen 71,72 und 73, die über die Schwenkachse 74 untereinander verbunden sind. In der Lamellenzunge 73 ist noch eine Koppelachse 75 vorgesehen. - Die Teillamelle 80 besteht aus den Lamellenzungen 81,82 und 83, die abwechselnd zu den Lamellenzungen 71,72 und 73 angeordnet und untereinander über Stege 84 verbunden sind. In der Lamellenzunge 81 ist weiterhin eine Koppelachse 85 vorgesehen. Die Teillamelle 80 ist mittels entsprechender Ausnehmungen in den Lamellenzungen 81,82 und 83 auf die Schwenkachse 74 der Teillamelle 70 aufklippsbar. - Die feststehenden Lamellen 3 des Gehäuseteiles 2 befinden sich jeweils zwischen zwei Lamellenzungen.

Gemäß der schematischen Darstellung in Figur 7 sind mehrere Teillamellen 70 mittels der Koppelstange 76 untereinander gekoppelt. Die Koppelpunkte an den einzelnen Teillamellen haben dabei einen unterschiedlichen Abstand von der Schwenkachse 74. Ein Verschwenken der untersten dargestellten Teillamelle um einen gewissen Betrag führt daher gemäß Figur 8 zu einer entsprechend größeren Schrägstellung der beiden oberen dargestellten Teillamellen. - In gleicher Weise erfolgt im Bedarfsfalle die Koppelung der Teillamellen 80. Auch die Teillamellen gemäß Figur 4 können auf diese Weise miteinander gekoppelt werden.

## Patentansprüche

1. Luftauslaß für Innenräume, insbesondere für den Innenraum eines Kraftfahrzeuges,
bei dem ein Gehäuseteil (2) mit mehreren feststehenden (3) und mit mehreren untereinander gekoppelten, schwenkbar gelagerten Lamellen (4) zur Luftführung versehen ist,
bei dem die feststehenden Lamellen (3) parallel zueinander, die schwenkbaren Lamellen (4) mit zueinander parallelen Schwenkachsen und die feststehenden Lamellen quer zu den schwenkbaren Lamellen angeordnet sind

und bei dem jede schwenkbare Lamelle wenigstens zwei Lamellenzungen (44,45/47,48) aufweist und mittels der Lamellenzungen kämmend in die feststehenden Lamellen eingreifend angeordnet ist,
**dadurch gekennzeichnet,**
daß jede schwenkbare Lamelle (4) aus zwei Teillamellen (43,46) besteht, deren Lamellenzungen (44,45/47,48) einander abwechselnd angeordnet sind,
und daß jede Teillamelle (43,46) selbstständig schwenkbar ist.

2. Luftauslaß nach Anspruch 1, **dadurch gekennzeichnet,** daß jede Lamellenzunge der beiden Teillamellen (43,46) einen Schlitz (53) aufweist, in den jeweils eine feststehende Lamelle (3) eingreift.

3. Luftauslaß nach Anspruch 1 oder 2, **dadurch gekennzeichnet,** daß die Koppelpunkte zwischen der die jeweiligen Teillamellen (70,80) untereinander koppelnden Koppelstange (76) und den Teillamellen einen von Teillamelle zu Teillamelle zunehmenden bzw. abnehmenden Abstand zur jeweiligen Schwenkachse (74) der Teillamelle haben.

## Claims

1. Air outlet for interior spaces, in particular for the interior of a motor vehicle, in which
a housing part (2) is provided, for the purposes of air circulation, with several stationary lamellae (3) and with several coupled together and rotatably mounted lamellae (4),
in which the stationary lamellae (3) are arranged parallel to one another, the rotatable lamellae (4) are arranged with rotating axes parallel to one another and the stationary lamellae are arranged transversely to the rotatable lamellae
and in which each rotatable lamella has at least two lamella tongues (44,45/47,48) and is arranged so that it engages in a meshing manner into the stationary lamellae by means of the lamella tongues,
characterized in that
each rotatable lamella (4) consists of two partial lamellae (43,46), whose lamella tongues (44,45/47,48) are arranged alternately with one another,
and that each partial lamella (43,46) is independently rotatable.

2. Air outlet according to claim 1, characterized in that each lamella tongue of the two partial lamellae (43,46) has a slot (53), into which in each case a stationary lamella (3) engages.

3. Air outlet according to claim 1 or 2, characterized in that the coupling points between the coupling rod (76), coupling the respective partial lamellae (70,80) to one another, and the partial lamellae have a distance to the respective rotating axis (74) of the partial lamella which increases or decreases from partial lamella to partial lamella.

## Revendications

1. Diffuseur d'air pour des espaces intérieurs, notamment pour l'habitacle d'un véhicule automobile, et dans lequel
un élément de boîtier (2) est équipé de plusieurs lamelles fixes (3) et de plusieurs lamelles pivotantes (4), accouplées entre elles, pour guider l'air,
les lamelles fixes (3) sont parallèles entre elles et les lamelles pivotantes (4) sont disposées de telle sorte que leurs axes de pivotement sont parallèles entre eux, les lamelles fixes étant disposées transversalement par rapport aux lamelles pivotantes, et
chaque lamelle pivotante comporte au moins deux languettes (44,45/47,48) et est disposée de manière à être imbriquée à la manière d'un peigne, au moyen des languettes, entre les lamelles fixes,
caractérisé par le fait
que chaque lamelle pivotante (4) est formée de deux parties (43,46), dont les languettes (44,45/47,48) sont disposées en étant alternées entre elles, et
que chaque partie de lamelle (43,46) peut pivoter d'une manière indépendante.

2. Diffuseur d'air suivant la revendication 1, caractérisé par le fait que chaque languette des deux parties de lamelle (43,46) possède une forme (53), dans laquelle s'engage respectivement une lamelle fixe (3).

3. Diffuseur d'air suivant la revendication 1 ou 2, caractérisé par le fait que les points de couplage entre la barre de couplage (76), qui accouple entre elles les parties respectives de lamelles (70,80), et les parties de lamelles sont situées par rapport à l'axe respectif de pivotement (74) des parties de lamelles, à une distance qui augmente ou diminue d'une lamelle à la suivante.

FIG 1

FIG 2

FIG 5

FIG 3

FIG 4

FIG 6

FIG 7

FIG 8